# EUROPEAN PATENT SPECIFICATION

(11) **EP 3 988 252 B1**
(45) Date of publication and mention of the grant of the patent: **26.07.2023**
(21) Application number: 20203059.9
(22) Date of filing: 21.10.2020
(51) Int. Cl.: B25J 9/16

(54) **POSITIONING DEVICE FOR A POSITIONING SYSTEM**
POSITIONIERUNGSVORRICHTUNG FÜR EIN POSITIONIERUNGSSYSTEM
DISPOSITIF DE POSITIONNEMENT POUR UN SYSTÈME DE POSITIONNEMENT

(43) Date of publication of application: 27.04.2022
(73) Proprietor: Zerofix Tooling AB, 172 66 Sundbyberg (SE)
(72) Inventor: Sundström, Erik, 172 66 Sundbyberg (SE)
(74) Representative: Ehrner & Delmar Patentbyrå AB

(56) References cited:
- EP-A1- 0 619 438
- EP-A2- 3 247 532
- WO-A1-2019/042493

## Description

### Technical Field

The invention relates to a positioning device for a positioning system for positioning a first object in relation to a second object. Furthermore, the invention also relates to a positioning system comprising such a positioning device.

### Background

When placing two objects, e.g. a working table or a base plate on a milling machine table, it is important to be able to accurately position these two objects in relation to each other in order to be able to use e.g. a milling machine reference system for an object arranged on the working table. Before the 1960:s a majority of the machining and measuring within the engineering industry took place by making relative measurements using e.g. micrometer calipers, sliding calipers and templates for dimensional accuracy. Drawings were produced manually to fit these manufacturing methods. The precision depended more on the skill of the workers and operators of the machines than the stability and the lack of freedom of play of the machines. When numerically controlled machines for the production appeared on the market, the manufacturing methods began to be more and more automated and today the production is to a large extent more or less automated using e.g. CNC-controlled multioperation machines.

During the above development of the production processes, the manufacturers of the machines have also minimized the previous problems of the machines being able to turn the input instructions to corresponding output process steps without accuracy problems. This is also the case regarding problems with temperature stability, freedom of play and elastic deformation. The above enables for metalworking equipment to move to completely digitalized production by absolute coordinated originating from a given zero offset point using digital measurement and control systems and automated tool changing systems in the machines.

A reference system commonly used in e.g. machine shops is the Cartesian coordinate system having XYZ-directions. When talking about accurate positioning in machine shops and e.g. turning, milling and drilling, tolerances of 0.01 mm - 1 µm are considered "accurate", whereas tolerances smaller than 1 µm are often difficult to use in production applications as such tolerances often are difficult to measure in real production. Whereas it is relatively easy to achieve and maintain high tolerances in a laboratory environment, temperature changes and pollution as well as wear are issues that have to be handled in real production equipment whether it is manually operated or automated.

Document EP3247532 shows a positioning device according to prior art.

### Summary

An objective of embodiments of the invention is to provide a solution which mitigates or solves the drawbacks and problems of conventional solutions.

Another objective of embodiments of the invention is to provide a solution with improved accuracy in the XY-plane positioning of a first object in relation to a second object.

The above and further objectives are solved by the subject matter of the independent claims.

Further advantageous embodiments of the invention can be found in the dependent claims.

According to a first aspect of the invention, the above mentioned and other objectives are achieved with a positioning device for a system for positioning a first object in relation to a second object in a XY-reference system, the positioning device comprising:
a first XY-reference means configured to be fixed to the first object, and
a second XY-reference means configured to be fixed to the second object; wherein
the first XY-reference means comprises a spring arrangement configured to abut against the second XY-reference means in operation for positioning the first object in relation to the second object in XY-directions, wherein the spring arrangement comprises at least one first spring portion serially coupled to at least one second spring portion, and wherein the spring arrangement (130) further comprises a spring coupling portion (140) configured to serially couple the first spring portion (132) and the second spring portion (134), and
the first spring portion is configured to deflect in a positive Z-direction in operation and the second spring portion is configured to deflect in a negative Z-direction in operation to compensating for the deflection of the first spring portion in the positive Z-direction.

The positioning device may also be denoted a zero-positioning device or a positioning device.

The XY-reference system may also mean the XY-plane of a Cartesian coordinate system. The deflection of the first spring portion and the second spring portion may occur when a radial force is acting on the spring arrangement due to a press fit mounting. The deflection may also be understood as a deformation. The first XY-reference means may be denoted first XY-positioning means and the second XY-reference means may be denoted second XY-positioning means.

An advantage of the positioning device according to the first aspect is that the accuracy of the positioning of the first object in relation to the second object in the XY-plane is improved compared to conventional solutions.

In an implementation form of a positioning device according to the first aspect,
the first spring portion is configured to deflect in the positive Z-direction with a first amount, and
the second spring portion is configured to deflect in the negative Z-direction with a second amount,
wherein the first amount is the same as the second amount.

Hence, the deflection of the first spring portion and the second spring portion is balanced for controlled deflection of the spring arrangement.

In an implementation form of a positioning device according to the first aspect,
the first XY-reference means has a in a Z-direction conical inner surface; and
the second XY-reference means has a in a Z-direction conical outer surface.

Hence, the conical inner surface of the first XY-reference means may abut/press against the conical outer surface of the second XY-reference means in operation.

In an implementation form of a positioning device according to the first aspect,
the spring arrangement has an annular disc shape; and
the second XY-reference means comprises a taper.

In an implementation form of a positioning device according to the first aspect,
the second XY-reference means is configured to be fixed to the second object via a spacer.

In an implementation form of a positioning device according to the first aspect, the spring arrangement comprises
a rim portion serially coupled to the first spring portion and being configured to press against the taper of the second XY-reference means in operation.

In an implementation form of a positioning device according to the first aspect, the spring arrangement comprises
a press fit guiding means serially coupled to the second spring portion and configured to press against the first object in operation.

In an implementation form of a positioning device according to the first aspect,
the rim portion is arranged at an inner circumference of the spring arrangement, and
the press fit guiding means is arranged at an outer circumference of the spring arrangement.

In an implementation form of a positioning device according to the first aspect, the spring coupling portion comprises a groove.

In an implementation form of a positioning device according to the first aspect, the groove is a punched groove.

In an implementation form of a positioning device according to the first aspect, the groove is circularly arranged with a constant radius around a center axis of the positioning device.

In an implementation form of a positioning device according to the first aspect, the spring arrangement is formed from a single sheet metal piece with constant thickness.

In an implementation form of a positioning device according to the first aspect, the second object is configured to support the first object in the positive Z-direction in operation.

According to a second aspect of the invention, the above mentioned and other objectives are achieved with a system for positioning a first object in relation to a second object in a XY-reference system, the system comprising at least one positioning device according to any one of the preceding claims.

Further applications and advantages of the embodiments of the invention will be apparent from the following detailed description.

### Brief Description of the Drawings

The appended drawings are intended to clarify and explain different embodiments of the invention, in which:
- Fig. 1 shows in a cross sectional view a positioning system according to an embodiment of the invention;
- Fig. 2 shows in a cross sectional view a positioning device according to an embodiment of the invention;
- Fig. 3a and 3b show a spring arrangement according to an embodiment of the invention in a cross sectional view and in a view from above, respectively;
- Fig. 4 shows in a cross sectional view a section of a spring arrangement according to an embodiment of the invention; and
- Fig. 5 illustrates exemplary measurements of an exemplary spring arrangement.

### Detailed Description

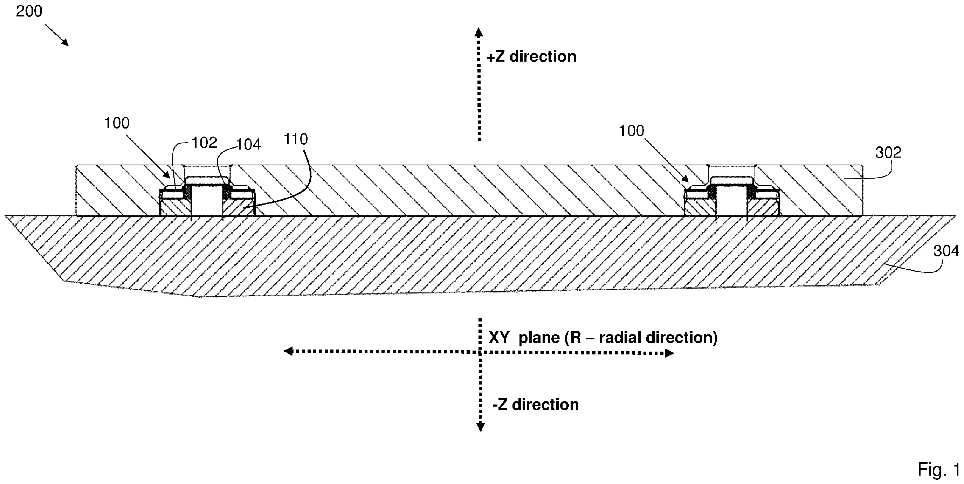

Fig. 1 shows in a cross sectional view a positioning system 200 according to an embodiment of the invention. The positioning system 200 may comprise any number of positioning devices 100 and in the exemplary case of Fig. 1 two positioning devices 100 are shown in its mounted operating position. Each positioning device 100 may act as a zero-reference in the system 200 for high accuracy. Further, the system 200 also comprises a first object 302 and a second object 304 to be positioned in relation to each other in the XY-reference system or the XY-plane. The positive Z-direction +Z and the negative Z-direction -Z are also illustrated hence a Cartesian coordinate system is illustrated. However, in embodiments of the invention when cylindrical symmetry is at hand cylindrical coordinates may also be used with an axis A and a radial extension R as also illustrated in the Figs.

Furthermore, the first object 302 may e.g. be a working table, a base plate, a fixture, a pallet, a tool, etc., and the second object 304 may e.g. be a machine table, a machine base, etc. but are not limited thereto. The first object 302 may comprise a downward directed cavity in which cavity the first XY-reference means 102 may be fixed to as shown in Fig. 1 against the side walls of the cavity. Therefore, the first XY-reference means 102 may be arranged to be fixed against an inner wall of the cavity by a press-fit, e.g. if the first XY-reference means 102 comprises a spring arrangement, and may be mounted non-removably therein, e.g. by pressing it therein using a mandrel. The second XY-reference means 104 may be configured to be fixed to the second object 304 with or without a spacer 110. The second XY-reference means 104 may be made of hard metal in order to withstand wear.

In embodiments of the invention, the second object 304 is configured to support the first object 302 in the positive Z-direction in operation as shown in Fig. 1.

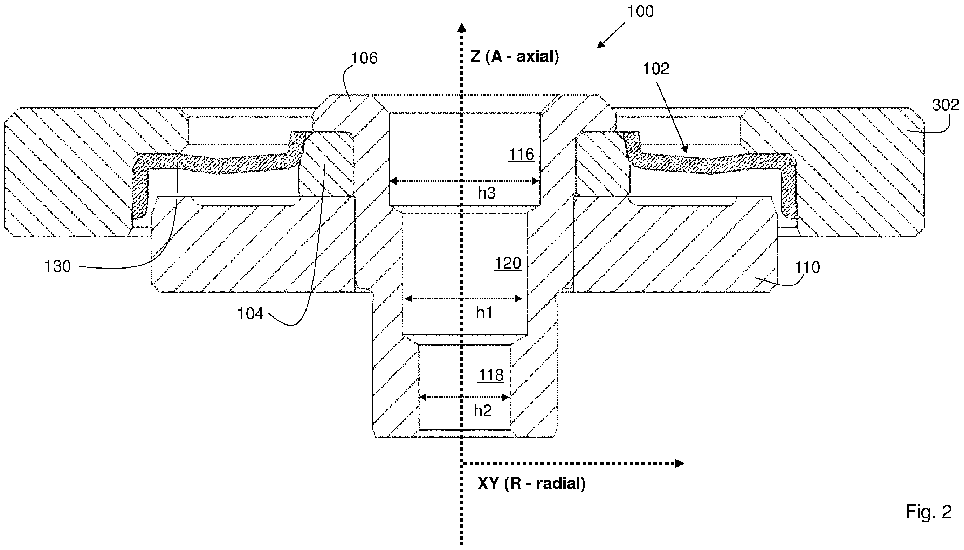

Fig. 2 shows in a cross sectional view a positioning device 100 according to an embodiment of the invention. The positioning device 100 comprises a first XY-reference means 102 configured to be fixed to the first object 302, and a second XY-reference means 104 configured to be fixed to the second object 304. The first XY-reference means 102 comprises a spring arrangement 130 configured to abut or press against the second XY-reference means 104 in operation for positioning the first object 302 in relation to the second object 304 in XY-directions or in the XY-plane. Further, the spring arrangement 130 comprises at least one first spring portion 132 which is serially coupled to at least one second spring portion 134. In operation, the first spring portion 132 is configured to deflect or deform in a positive Z-direction +Z and the second spring portion 134 is configured to deflect or deform in a negative Z-direction -Z so as to compensating for the deflection or the deformation of the first spring portion 132 in the positive Z-direction.

In embodiments of the invention, the first spring portion 132 is configured to deflect in the positive Z-direction +Z with a first amount, and the second spring portion 134 is configured to deflect in the negative Z-direction -Z with a second amount. The first amount is substantially the same as the second amount for balancing the deflection of the first spring portion 132 and the second spring portion, respectively, for controlled total deflection of the spring arrangement 130 of the positioning device 100.

When the first XY-reference means 102 is mounted, e.g. by press fit in which a high radial force will act on the first XY-reference means 102, the first XY-reference means 102 may deform in a non-controlled manner so that the positioning of the first object in relation to the second object is not accurate enough for precision applications. However, by having a spring arrangement 130 according to embodiments of the invention the deformation or deflection of the spring arrangement 130 may be controlled. This means improved accuracy.

Furthermore, the positioning device 100 may comprise means for attaching/fastening the positioning device 100 to the first object 302 and the second object 304, respectively. In the disclosed embodiment, the positioning device 100 comprises first attachment means 120 for attaching to the first object 302 and second attachment means 118 for attaching to the second object 306. The first attachment means 120 and the second attachment means 118 may e.g. be first h1 and second h2 through holes of different diameters arranged inside a body 106, the latter having an axial extension and e.g. having cylindrical symmetry and further a section that is encircled by a taper of the second XY-reference means 104. The body may be made of a suitable material such as a metal. The first h1 and second h2 through holes may comprise inner threads configured to receive outer threads of bolts (not shown) of the first 302 and second objects 304, respectively. Thereby, a secure attachment or fastening of the positioning device 100 to the first 302 and second objects 304, respectively, may be achieved. As also illustrated herein, the positioning device 100 may comprises a clearance 116 also in the form of a through hole h3 having a diameter larger than the diameter of the through holes of the first 120 and second 118 attachment means. Thereby, the risk of the positioning device 100 being misaligned due to radial forces acting on the positioning device 100 so as to distort the positioning accuracy in the XY-plane is reduced or minimized. This is especially the case when the positioning device 100 is to be mounted in the system 200.

As further disclosed in Fig. 2, the first XY-reference means 102 may have a in a Z-direction conical inner surface which in operation abuts or presses against a in a Z-direction conical outer surface of the second XY-reference means 104. Moreover, in embodiments of the invention, the spring arrangement 130 has an annular disc shape and the second XY-reference means 104 comprises a taper. Therefore, in such cases, the disc may comprise the conical inner surface whilst the taper comprises the conical outer surface abutting each other as shown in Fig. 2. It may also be noted that the second XY-reference means 104 may be configured to be fixed to the second object 304 via a spacer (also known as a spacing device or a distance peace) 110 as shown in Fig. 1 and 2. The spacer 110 supports the first object in the Z-direction and depending on application the thickness and shape of the spacer 110 may vary.

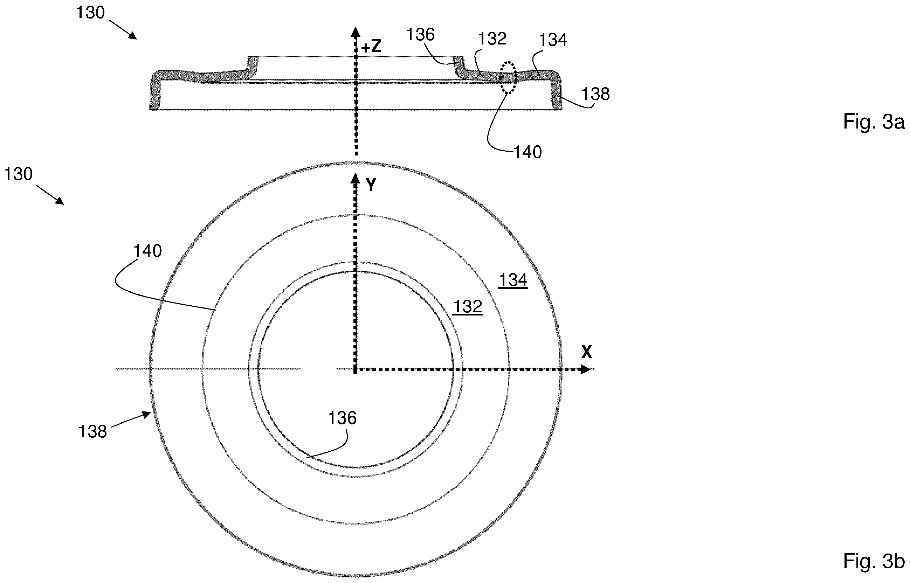

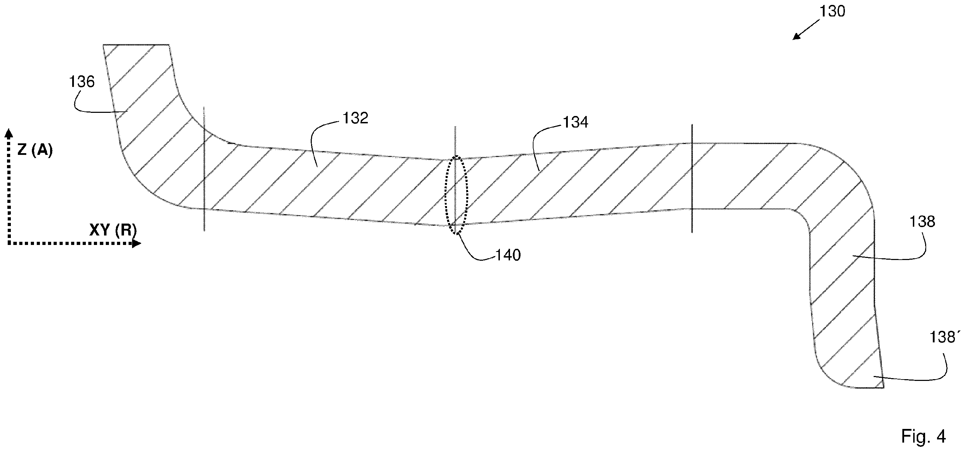

Fig. 3a and 3b show a spring arrangement 130 according to an embodiment of the invention in a cross sectional view and in a view from above, respectively. Furthermore, Fig. 4 shows in a cross sectional view a section of the spring arrangement 130. With reference to mentioned Fig. 3a, 3b and 4 more details and aspects of the spring arrangement 130 will now be described.

As disclosed, in embodiments of the invention, the spring arrangement 130 comprises a rim portion 136 which is serially coupled to the first spring portion 132. The rim portion 136 may be of the type stiff rim and being configured to press against the taper of the second XY-reference means 104 in operation as shown in Fig. 2. Further, the spring arrangement 130 may comprise a press fit guiding means 138 serially coupled to the second spring portion 134. The press fit guiding means 138 is configured to press or abut against the first object 302 in operation as also shown in Fig. 2. The press fit guiding means 138 may in this respect comprise a beak portion 138' so as to lock and secure the spring arrangement 130 against the first object 302 in operation after mounting. In embodiments of the invention, the rim portion 136 is arranged at an inner circumference of the spring arrangement 130, whilst the press fit guiding means 138 is arranged at an outer circumference of the spring arrangement 130.

As previously mentioned, the first spring portion 132 is serially coupled to the second spring portion 134, or vice versa. This may be achieved by the use of a spring coupling portion 140 that is configured to serially couple the first spring portion 132 and the second spring portion 134 to each other. The spring coupling portion 140 may be considered as a spring hinge mechanically coupling independent springs but also demark different spring portions from each other. It is noted that the spring arrangement 130 herein may comprise any number of spring coupling portions coupling any number of first 132 and second 134 spring portions which means that the invention is not limited to a single spring coupling portion coupling a single first spring portion and a single second spring portion.

In further embodiments of the invention, the spring coupling portion 140 comprises of a groove which may be circularly arranged with a constant radius around a center axis A of the positioning device 100 as shown in 3a, 3b and 4. It has been noted that a groove works perfectly well in acting as a spring coupling portion 140 for many applications. However, the spring coupling portion 140 may be realized with other means having the same function as previously described.

When the spring coupling portion 140 comprises of a groove economic advantages is achievable when manufacturing the spring arrangement 130 herein. For example, the groove may be a punched groove which is inexpensive to produce. In embodiments of the invention, the spring arrangement 130 is formed from a single sheet metal piece with constant thickness, and the single sheet metal piece may be punched or stamped in a single manufacturing step using a dedicated tool so as to produce the spring arrangement 130. In this way both high accuracy in positioning and low cost at production of the positioning device 100 is possible.

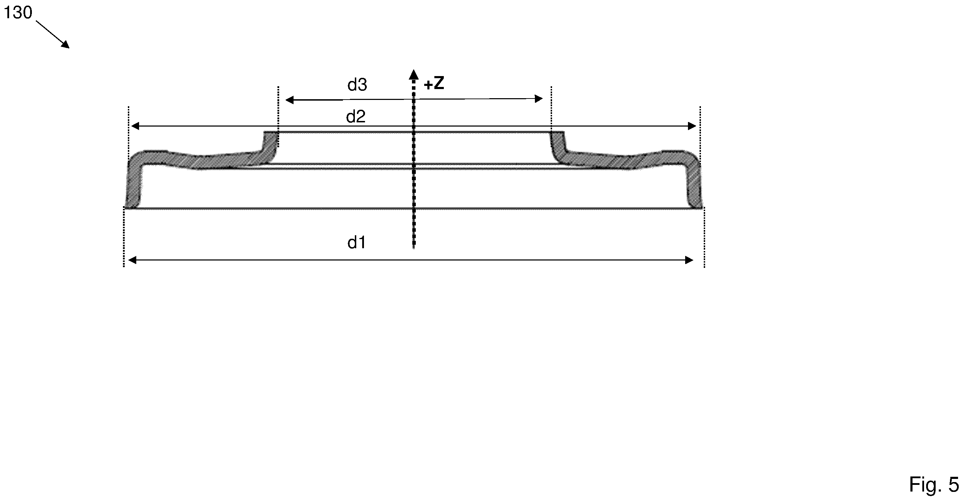

For providing even deeper understanding of embodiments of the invention in respect of the spring arrangement 130, some numbers are given which are exemplary only and are dependent on the application of the positioning device 100 and positioning system 200. With reference to Fig. 5, the spring arrangement 130 may have a symmetrical disc shape with a smaller outer diameter d2 of 36mm, a larger outer diameter d1 of 36.12mm, and an inner diameter d3 at the stiffed rim of 17.50mm. The thickness of such a disc may e.g. be formed from a 0.9mm thick sheet metal with a punched groove acting as the spring coupling portion 140. Generally, the different parts of the positioning device 100 may be made from any suitable material having the properties needed for its functioning such as different types of metal, plastics, etc.

Finally, it should be understood that the invention is not limited to the embodiments described above, but also relates to and incorporates all embodiments within the scope of the appended independent claims. The invention is limited by the appended independent claim.

## Claims

1. A positioning device (100) for a system (200) for positioning a first object (302) in relation to a second object (304) in a XY-reference system, the positioning device (100) comprising:
a first XY-reference means (102) configured to be fixed to the first object (302), and
a second XY-reference means (104) configured to be fixed to the second object (304); wherein
the first XY-reference means (102) comprises a spring arrangement (130) configured to abut against the second XY-reference means (104) in operation for positioning the first object (302) in relation to the second object (304) in XY-directions,
wherein the spring arrangement (130) comprises at least one first spring portion (132) serially coupled to at least one second spring portion (134), and wherein
the first spring portion (132) is configured to deflect in a positive Z-direction (+Z) in operation and the second spring portion (134) is configured to deflect in a negative Z-direction (-Z) in operation to compensating for the deflection of the first spring portion (132) in the positive Z-direction,
the positioning device **characterized in that** the spring arrangement (130) further comprises a spring coupling portion (140) configured to serially couple the first spring portion (132) and the second spring portion (134).

2. The positioning device (100) according to claim 1, wherein
the first spring portion (132) is configured to deflect in the positive Z-direction (+Z) with a first amount, and
the second spring portion (134) is configured to deflect in the negative Z-direction (-Z) with a second amount,
wherein the first amount is the same as the second amount.

3. The positioning device (100) according to any one of the preceding claims, wherein
the first XY-reference means (102) has a in a Z-direction conical inner surface; and
the second XY-reference means (104) has a in a Z-direction conical outer surface.

4. The positioning device (100) according to any one of the preceding claims, wherein
the spring arrangement (130) has an annular disc shape; and
the second XY-reference means (104) comprises a taper.

5. The positioning device (100) according to any one of the preceding claims, wherein
the second XY-reference means (104) is configured to be fixed to the second object (304) via a spacer (110).

6. The positioning device (100) according to claim 4 or 5, wherein the spring arrangement (130) comprises
a rim portion (136) serially coupled to the first spring portion (132) and being configured to press against the taper of the second XY-reference means (104) in operation.

7. The positioning device (100) according to claim 6, wherein the spring arrangement (130) comprises
a press fit guiding means (138) serially coupled to the second spring portion (134) and configured to press against the first object (302) in operation.

8. The positioning device (100) according to claim 7, wherein
the rim portion (136) is arranged at an inner circumference of the spring arrangement (130), and
the press fit guiding means (138) is arranged at an outer circumference of the spring arrangement (130).

9. The positioning device (100) according to any one of the preceding claims, wherein the spring coupling portion (140) comprises a groove.

10. The positioning device (100) according to claim 9, wherein the groove is a punched groove.

11. The positioning device (100) according to claim 9 or 10, wherein the groove is circularly arranged with a constant radius around a center axis (A) of the positioning device (100).

12. The positioning device (100) according to any one of the preceding claims, wherein the spring arrangement (130) is formed from a single sheet metal piece with constant thickness.

13. The positioning device (100) according to any one of the preceding claims, wherein the second object (304) is configured to support the first object (302) in the positive Z-direction in operation.

14. A system (200) for positioning a first object (302) in relation to a second object (304) in a XY-reference system, the system (200) comprising at least one positioning device (100) according to any one of the preceding claims.

## Patentansprüche

1. Positionierungsvorrichtung (100) für ein System (200) zum Positionieren eines ersten Objekts (302) in Relation zu einem zweiten Objekt (304) in einem XY-Referenzsystem, wobei die Positionierungsvorrichtung (100) Folgendes umfasst:
ein erstes XY-Referenzmittel (102), das dazu ausgelegt ist, an dem ersten Objekt (302) befestigt zu sein, und
ein zweites XY-Referenzmittel (104), das dazu ausgelegt ist, an dem zweiten Objekt (304) befestigt zu sein; wobei
das erste XY-Referenzmittel (102) eine Federanordnung (130) umfasst, die dazu ausgelegt ist, im Betrieb an dem zweiten XY-Referenzmittel (104) zum Positionieren des ersten Objekts (302) in Relation zu dem zweiten Objekt (304) in XY-Richtungen anzuliegen,
wobei die Federanordnung (130) mindestens einen ersten Federabschnitt (132) umfasst, der seriell mit mindestens einem zweiten Federabschnitt (134) gekoppelt ist, und wobei
der erste Federabschnitt (132) dazu ausgelegt ist, im Betrieb in eine positive Z-Richtung (+Z) auszulenken, und der zweite Federabschnitt (134) dazu ausgelegt ist, im Betrieb in eine negative Z-Richtung (-Z) auszulenken, um die Auslenkung des ersten Federabschnitts (132) in die positive Z-Richtung auszugleichen,
wobei die Positionierungsvorrichtung **dadurch gekennzeichnet ist, dass** die Federanordnung (130) ferner einen Federkopplungsabschnitt (140) umfasst, der dazu ausgelegt ist, den ersten Federabschnitt (132) und den zweiten Federabschnitt (134) seriell zu koppeln.

2. Positionierungsvorrichtung (100) nach Anspruch 1, wobei
der erste Federabschnitt (132) dazu ausgelegt ist, in der positiven Z-Richtung (+Z) mit einem ersten Betrag auszulenken, und
der zweite Federabschnitt (134) dazu ausgelegt ist, in der negativen Z-Richtung (-Z) mit einem zweiten Betrag auszulenken,
wobei der erste Betrag derselbe wie der zweite Betrag ist.

3. Positionierungsvorrichtung (100) nach einem der vorhergehenden Ansprüche, wobei
das erste XY-Referenzmittel (102) eine in einer Z-Richtung konische Innenfläche aufweist; und
das zweite XY-Referenzmittel (104) eine in einer Z-Richtung konische Außenfläche aufweist.

4. Positionierungsvorrichtung (100) nach einem der vorhergehenden Ansprüche, wobei
die Federanordnung (130) eine ringförmige Scheibenform aufweist; und
das zweite XY-Referenzmittel (104) eine Verjüngung umfasst.

5. Positionierungsvorrichtung (100) nach einem der vorhergehenden Ansprüche, wobei
das zweite XY-Referenzmittel (104) dazu ausgelegt ist, an dem zweiten Objekt (304) über einen Abstandhalter (110) befestigt zu sein.

6. Positionierungsvorrichtung (100) nach Anspruch 4 oder 5, wobei die Federanordnung (130) umfasst
einen Randabschnitt (136), der seriell mit dem ersten Federabschnitt (132) gekoppelt und dazu ausgelegt ist, im Betrieb gegen die Verjüngung des zweiten XY-Referenzmittels (104) zu drücken.

7. Positionierungsvorrichtung (100) nach Anspruch 6, wobei die Federanordnung (130) umfasst
ein Pressverbindungsführungsmittel (138), das seriell mit dem zweiten Federabschnitt (134) gekoppelt und dazu ausgelegt ist, im Betrieb gegen das erste Objekt (302) zu drücken.

8. Positionierungsvorrichtung (100) nach Anspruch 7, wobei
der Randabschnitt (136) an einem Innenumfang der Federanordnung (130) angeordnet ist, und
das Pressverbindungsführungsmittel (138) an einem Außenumfang der Federanordnung (130) angeordnet ist.

9. Positionierungsvorrichtung (100) nach einem der vorhergehenden Ansprüche, wobei der Federkopplungsabschnitt (140) eine Nut umfasst.

10. Positionierungsvorrichtung (100) nach Anspruch 9, wobei die Nut eine gestanzte Nut ist.

11. Positionierungsvorrichtung (100) nach Anspruch 9 oder 10, wobei die Nut kreisförmig mit einem konstanten Radius um eine Mittelachse (A) der Positionierungsvorrichtung (100) angeordnet ist.

12. Positionierungsvorrichtung (100) nach einem der vorhergehenden Ansprüche, wobei die Federanordnung (130) aus einem einzigen Metallblechstück mit konstanter Dicke ausgebildet ist.

13. Positionierungsvorrichtung (100) nach einem der vorhergehenden Ansprüche, wobei das zweite Objekt (304) dazu ausgelegt ist, im Betrieb das erste Objekt (302) in der positiven Z-Richtung zu stützen.

14. System (200) zum Positionieren eines ersten Objekts (302) in Relation zu einem zweiten Objekt (304) in einem XY-Referenzsystem, wobei das System (200) mindestens eine Positionierungsvorrichtung (100) nach einem der vorhergehenden Ansprüche umfasst.

## Revendications

1. Dispositif de positionnement (100) pour un système (200) afin de positionner un premier objet (302) par rapport à un deuxième objet (304) dans un système de référence XY, le dispositif de positionnement (100) comprenant :
un premier moyen de référence XY (102) configuré pour être fixé au premier objet (302), et
un deuxième moyen de référence XY (104) configuré pour être fixé au deuxième objet (304) ;
le premier moyen de référence XY (102) comprend un agencement de ressort (130) configuré pour venir en butée contre le deuxième moyen de référence XY (104) en fonctionnement pour positionner le premier objet (302) par rapport au deuxième objet (304) dans des directions XY, l'agencement de ressort (130) comprenant au moins une première portion de ressort (132) couplée en série à au moins une deuxième portion de ressort (134),
la première portion de ressort (132) est configurée pour dévier dans une direction Z positive (+Z) en fonctionnement et la deuxième portion de ressort (134) est configurée pour dévier dans une direction Z négative (- Z) en fonctionnement pour compenser la déviation de la première portion de ressort (132) dans la direction Z positive,
le dispositif de positionnement étant **caractérisé en ce que** l'agencement de ressort (130) comprend en outre une portion de couplage de ressort (140) configurée pour coupler en série la première portion de ressort (132) et la deuxième portion de ressort (134).

2. Dispositif de positionnement (100) selon la revendication 1, dans lequel
la première portion de ressort (132) est configurée pour dévier dans la direction Z positive (+Z) d'une première quantité, et
la deuxième portion de ressort (134) est configurée pour dévier dans la direction Z négative (-Z) d'une deuxième quantité,
la première quantité étant la même que la deuxième quantité.

3. Dispositif de positionnement (100) selon l'une quelconque des revendications précédentes, dans lequel le premier moyen de référence XY (102) a une surface interne conique dans une direction Z ; et
le deuxième moyen de référence XY (104) a une surface externe conique dans une direction Z.

4. Dispositif de positionnement (100) selon l'une quelconque des revendications précédentes, dans lequel l'agencement de ressort (130) a une forme de disque annulaire ; et
le deuxième moyen de référence XY (104) comprend un effilement.

5. Dispositif de positionnement (100) selon l'une quelconque des revendications précédentes, dans lequel le deuxième moyen de référence XY (104) est configuré pour être fixé au deuxième objet (304) par l'intermédiaire d'un élément d'espacement (110).

6. Dispositif de positionnement (100) selon la revendication 4 ou la revendication 5, dans lequel l'agencement de ressort (130) comprend
une portion de rebord (136) couplée en série à la première portion de ressort (132) et configurée pour appuyer contre la conicité du deuxième moyen de référence XY (104) en fonctionnement.

7. Dispositif de positionnement (100) selon la revendication 6, dans lequel l'agencement de ressort (130) comprend
un moyen de guidage à ajustement forcé (138) couplé en série à la deuxième portion de ressort (134) et configuré pour appuyer contre le premier objet (302) en fonctionnement.

8. Dispositif de positionnement (100) selon la revendication 7, dans lequel
la portion de rebord (136) est agencée au niveau d'une circonférence interne de l'agencement de ressort (130), et
le moyen de guidage à ajustement forcé (138) est agencé au niveau d'une circonférence externe de l'agencement de ressort (130).

9. Dispositif de positionnement (100) selon l'une quelconque des revendications précédentes, dans lequel la portion de couplage de ressort (140) comprend une rainure.

10. Dispositif de positionnement (100) selon la revendication 9, dans lequel la rainure est une rainure perforée.

11. Dispositif de positionnement (100) selon la revendication 9 ou la revendication 10, dans lequel la rainure est agencée de façon circulaire avec un rayon constant autour d'un axe central (A) du dispositif de positionnement (100).

12. Dispositif de positionnement (100) selon l'une quelconque des revendications précédentes, dans lequel l'agencement de ressort (130) est formé à partir d'une pièce de tôle unique d'épaisseur constante.

13. Dispositif de positionnement (100) selon l'une quelconque des revendications précédentes, dans lequel le deuxième objet (304) est configuré pour supporter le premier objet (302) dans la direction Z positive en fonctionnement.

14. Système (200) de positionnement d'un premier objet (302) par rapport à un deuxième objet (304) dans un système de référence XY, le système (200) comprenant au moins un dispositif de positionnement (100) selon l'une quelconque des revendications précédentes.
